# EUROPÄISCHE PATENTANMELDUNG

(11) **EP 3 001 408 A1**
(43) Veröffentlichungstag der Anmeldung: **30.03.2016**
(21) Anmeldenummer: 14186854.7
(22) Anmeldetag: 29.09.2014
(51) Int. Cl.: G09G 5/02, G01J 3/46, G06F 3/0484

(54) **Verfahren zum Steuern eines Bildschirms, Farbtoleranzbereiche innerhalb eines dreidimensionalen Farbraumes darzustellen**

(71) Anmelder: Baumer Optronic GmbH, 01454 Radeberg (DE)
(72) Erfinder: Siegel, Sebastian, 01309 Dresden (DE); Brettschneider, Falk, 01139 Dresden (DE)
(74) Vertreter: Strauss, Steffen

(57) **Zusammenfassung**

Die Erfindung betrifft ein Verfahren (1100) zum Steuern eines Bildschirms (903), Farbtoleranzbereiche innerhalb eines dreidimensionalen Farbraumes darzustellen, mit: Erfassen (1101) zumindest eines Farbtoleranzbereichs (301, 303, 305) innerhalb des dreidimensionalen Farbraumes durch den Prozessor (901), wobei sich der zumindest eine Farbtoleranzbereich (301, 303, 305) durch zumindest einen Farbwert in jeder Dimension und zumindest einen Toleranzparameter (ΔL, ΔC, Δh oder ΔE) in zumindest einer Dimension oder Metrik des dreidimensionalen Farbraumes bestimmt; Erzeugen (1102) eines Steuersignals (904) durch den Prozessor (901) zum Steuern des Bildschirms (903), wobei das Steuersignal (904) den Bildschirm (903) anweist, eine rotierende dreidimensionale Darstellung des zumindest einen Farbtoleranzbereichs (301, 303, 305) basierend auf den Toleranzparametern (L/ΔL, a/ΔC, b/Δh) des zumindest einen Farbtoleranzbereichs (301, 303, 305) auf dem Bildschirm (903) zu erzeugen; und Steuern (1103) des Bildschirms (903) durch das Steuersignal (904), die rotierende dreidimensionale Darstellung des zumindest einen Farbtoleranzbereichs (301, 303, 305) auf dem Bildschirm (903) darzustellen.

## Beschreibung

Die vorliegende Erfindung betrifft ein Verfahren zum Steuern eines Bildschirms, Farbtoleranzbereiche innerhalb eines dreidimensionalen Farbraumes darzustellen sowie ein Bildverarbeitungssystem mit einem Prozessor und einem Bildschirm.

In der industriellen Bildverarbeitung ist die Auswertung von Farbbildern zunehmend von Bedeutung. In der Regel lassen sich aus einer Prüfaufgabe in der industriellen (Farb-) Bildverarbeitung konkrete Anforderungen an die Farbinspektion ableiten. Eine Auswahl praxisrelevanter Szenarien sei im Folgenden genannt: Zuordnung eines Arbeitsbereichs zu einer von mehreren vorher angelernten Farben; Vergleich aller Farbwerte eines (weitgehend homogenen) Arbeitsbereichs mit einer Soll-Farbe; Blob-Analyse, wobei eine Farbe als Entscheidungskriterium (Binarisierung) dienen kann.

Bei den vorgenannten Szenarien handelt es sich beim Begriff "Farbe" aus technischer Sicht jeweils um einen "Farbbereich", also einen Toleranzbereich. Beispielsweise könnte eine Farbe "rot" vom Anwender definiert werden, welche gewisse Toleranzen in Bezug auf die Helligkeit, die Sättigung und den Farbton aufweist. Solche Toleranzen lassen sich in der jeweiligen Erfassung der Farbe in einem technischen Modell (z. B. Farbraum) mit angeben.

Im Allgemeinen hat der Anwender konkrete Vorstellungen an den Toleranzbereich einer Farbe. Betrachtet man z. B. die Aufgabe, eine Zweifarb-LED (rot/grün) zu kontrollieren, so kann für die Unterscheidung, ob die LED rot oder grün leuchtet, ein vergleichsweise großer Toleranzbereich für die beiden Farben gewählt werden. Gibt es allerdings Fehlerfälle, in denen die LED gelb oder orange leuchten kann, so muss der Toleranzbereich für die Farben rot und grün soweit eingeschränkt werden, dass die Fehlerfarben nicht darin enthalten sind. Soll hingegen auch die Farbtreue inspiziert werden, so wird der Anwender den Toleranzbereich entsprechend seiner Vorstellung an die Farbtoleranz (wahrscheinlich entsprechend klein) wählen.

Ein Toleranzbereich einer Farbe umfasst im Allgemeinen einen 3D-Körper in einem Farbraum. Je nachdem, welche Toleranzgrößen einstellbar sind, entstehen verschiedene geometrische Formen zur Beschreibung des Toleranzbereichs. So beschreibt z. B. ein Quader im RGB-Farbraum einen Toleranzbereich, bei dem für alle drei Farbkomponenten jeweils untere und obere Grenzen vorgegeben sind. Gibt man z. B. den Toleranzbereich als "Delta E"-Farbabweichung an, so entsteht eine Kugel im CIELab-Farbraum. Gibt man hingegen z. B. jeweils untere und obere Grenzen für die drei Komponenten im HSV-Farbraum an, so entsteht ein Hohlzylindersektor.

Den Toleranzbereich einer Farbe sinnvoll einzugrenzen, wird mit den bisher bekannten Anwendungen wenig komfortabel gelöst.

Um den Toleranzbereich einer Farbe für den Anwender darzustellen, wird immer auf Kombinationen von 1D- oder 2D-Darstellungen zurückgegriffen.

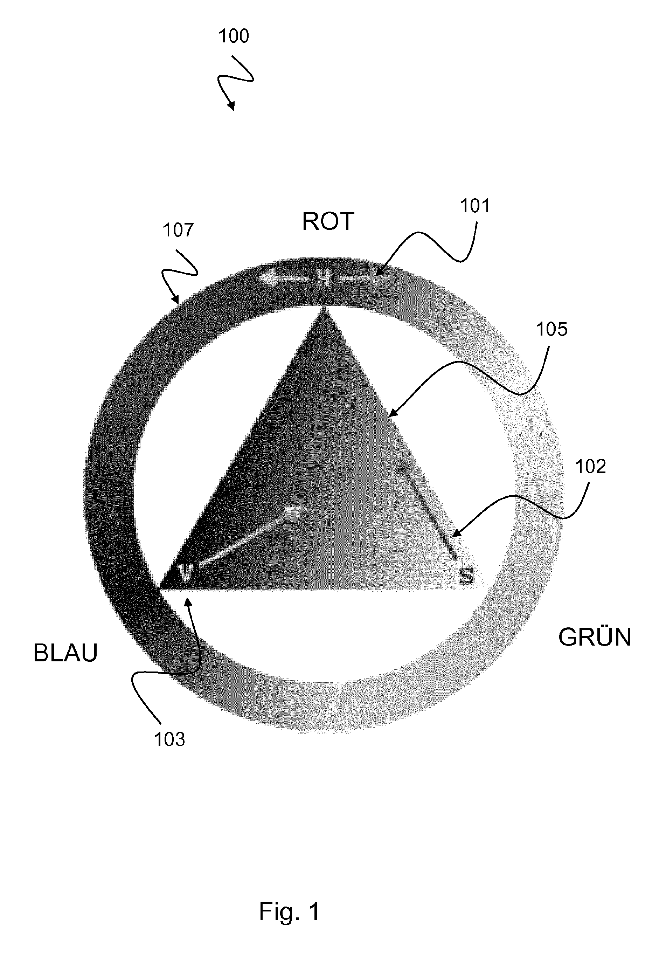

Figur 1 zeigt eine Darstellung des HSV Farbraums 100. Das zentrale Dreieck 105 aus Figur 1 stellt die maximal möglichen Toleranzen bezüglich der Parameter S (Sättigung) 102 und V (Helligkeit) 103 bei einem festen Wert von H (Farbwinkel) 101 dar. Die Darstellung einer Toleranz bezüglich der Parameter S 102 und V 103 kann als Teilfläche im zentralen Dreieck 105 erfolgen. Die Darstellung der Toleranz des Farbwinkels kann durch zwei Grenzwinkel im äußeren Kreisring 107 erfolgen.

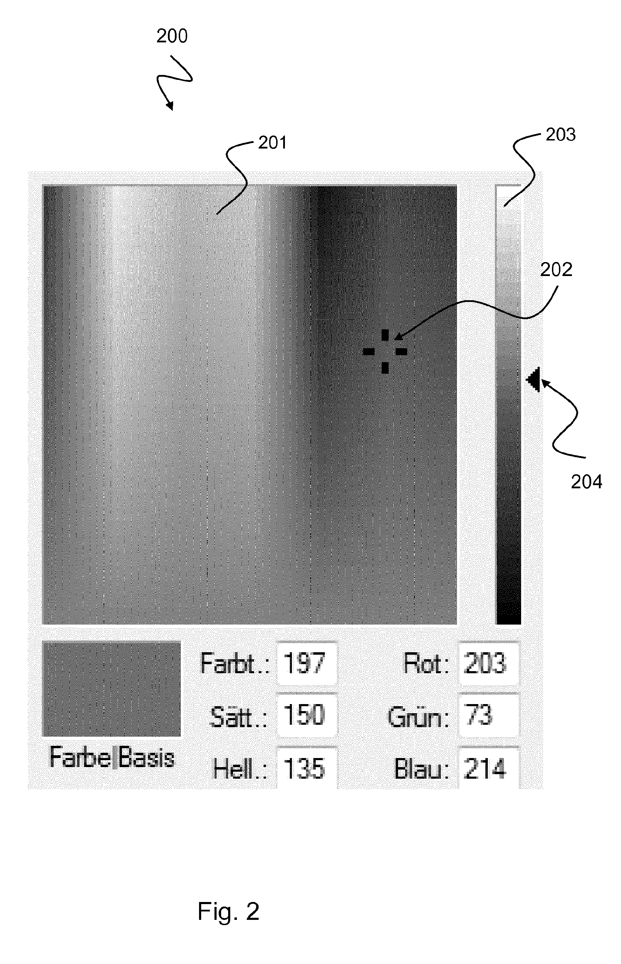

Figur 2 zeigt eine andere Darstellung des HSV Farbraums 200. Die Parameter H (Farbwinkel bzw. Farbton) und S (Sättigung) werden im links dargestellten Quadrat 201 ausgewählt. Im rechten Schieberegler 203 wird die Helligkeit für die feste Kombination aus H und S variiert. Toleranzen sind eingeschränkt darstellbar durch eine Teilfläche 202 im linken Quadrat 201 und zwei Schwellwerte/Grenzen 204 im rechten Schieberegler 203.

Häufig existieren auch Darstellungen, bei denen alle drei Parameter (z. B. H, S, V des HSV-Farbraumes) in Form von Schiebereglern gezeigt werden. Toleranzen können dann jeweils durch zwei Schwellwerte im Schieberegler dargestellt werden.

Der Nachteil der bisher existierenden Lösungen besteht darin, dass die Darstellung des Toleranzbereichs bei Kombinationen von 1D- bzw. 2D-Darstellungen unzureichend ist. Der Anwender kann sich kein vollständiges Bild des gesamten Toleranzbereichs machen. Damit fällt die Definition solcher Toleranzbereiche schwer. Anwender, die nicht über detaillierte Kenntnisse von Farbräumen verfügen, sind in der Regel überfordert, wenn sie zulässige Farbtoleranzen definieren sollen, um mithilfe einer Sensoranordnung einen Farbvergleich auszuführen.

Bei Farbklassifizierungsaufgaben (Zuordnung zu vorher gelernten Farbklassen) muss der Anwender mehrere Farben mit ihren Toleranzbereichen definieren. Hier ist für den Anwender nicht mit einfachen Mitteln erkennbar, wie separiert die einzelnen Toleranzbereiche im Farbraum positioniert sind. Die Robustheit des Algorithmus zur Lösung von Farbklassifizierungsaufgaben auf einer Sensoranordnung hängt aber wesentlich von den Toleranzbereichen ab. Zum Beispiel ist keine eindeutige Zuordnung mehr möglich, wenn sich einzelne Toleranzbereiche überschneiden.

Es ist die Aufgabe der vorliegenden Erfindung, ein Konzept für eine einfache Bildschirmsteuerung zur Visualisierung von Toleranzbereichen im Farbraum zu schaffen.

Diese Aufgabe wird durch die Merkmale der unabhängigen Ansprüche gelöst. Vorteilhafte Weiterbildungsformen sind Gegenstand der abhängigen Ansprüche.

Die Erfindung basiert auf der Idee, ein oder mehrere Toleranzbereiche in einem Farbraum derart darzustellen, dass sämtliche maximal zulässige Toleranzen bereits erkennbar sind. Ebenso ist die Konstellation, also die Anordnung und Separiertheit, mehrerer Toleranzbereiche einfach erkennbar. Damit kann auch ein unerfahrener Anwender schnell und einfach Toleranzbereiche definieren, die zur Lösung seiner Bildverarbeitungsaufgabe auf einer Sensoranordnung notwendig sind.

Mit der Erfindung wird also der Vorgang des Parametrierens von Toleranzbereichen von Farben einfach und komfortabel gelöst.

Ein Farbtoleranzbereich kann z. B. durch eine konkrete "zentrale" Farbe und Schwellen bezüglich einzelner Farbkomponenten definiert werden, wie die folgenden Beispiele zeigen.

In einem ersten Beispiel (RGB-Farbraum) kann für die zentrale Farbe mit den Parametern R=170, G=80, B=40 der Toleranzbereich mit den Toleranzparametern ΔR<=20, ΔG<=20, ΔB<=15 definiert werden.

In einem zweiten Beispiel (CIELab-Farbraum) kann für die zentrale Farbe mit den Parametern L=45, a=36, b=41 der Toleranzbereich mit dem für alle Parameter gleichem Toleranzparameter ΔE<=20 definiert werden.

In einem dritten Beispiel (CIELCh-Farbraum) kann für die zentrale Farbe mit den Parametern L=45, C=54, h=49° der Toleranzbereich mit den Toleranzparametern ΔL<=20, ΔC<=15, Δh<=15° definiert werden.

Andere Definitionen von Toleranzbereichen sind gleichfalls möglich.

Im Zusammenhang mit Klassifikationsaufgaben bei der Farbbildverarbeitung wird eine Farbe mit dem ihr zugeordneten Toleranzbereich auch als "Farbklasse" bezeichnet.

Bei der Auswertung eines Farbbildes wird für jeden Bildpunkt des Farbbildes (oder eines Arbeitsbereichs) eine Zuordnung zu einer vorher gelernten Farbklasse getroffen, sofern der Bildpunkt in den Toleranzbereich einer Farbklasse fällt.

Diese Anwendung kann z. B. dazu dienen, die Anwesenheit von Buntstiften in einer Packung zu prüfen, indem im Bild "über" jeder Stift-Position der Packung ein Arbeitsbereich wie eben beschrieben ausgewertet wird. Ist für jede Stiftfarbe genau eine Farbklasse definiert worden, so kann für jeden Arbeitsbereich ein Überdeckungsmaß zu allen Farbklassen angegeben werden (Anzahl der Bildpunkte, die einer konkreten Farbklasse zugeordnet wurden). Aus den Überdeckungswerten kann z. B. durch Schwellwertbildung die Anwesenheit des dort erwarteten Buntstiftes nachgewiesen werden.

Gibt es z. B. 10 verschiedene Stiftfarben, so müssen zunächst diese 10 Farben als Farbklassen bekannt gemacht bzw. angelernt werden. Mit dieser Erfindung wird gezeigt, wie der Anwender die Toleranzbereiche der angelernten Farbklassen darstellen kann. Diese Darstellung ermöglicht es auf einfache Art und Weise, die Grenzen der Toleranzbereiche an seine Aufgabenstellung sinnvoll anzupassen.

Die Erfindung zeigt eine Technik der Darstellung von Farbtoleranzen innerhalb eines 3D-Farbraumes auf. Dabei wird insbesondere die äußere Hülle des Toleranzbereichs in allen darin vorliegenden Farbkombinationen dargestellt. Die Konstellation mehrerer Farben kann ebenfalls vollständig dargestellt werden.

Die Darstellung des 3D-Farbraumes bzw. eines Toleranzbereichs einer Farbe erfolgt mithilfe eines am Bildschirm rotierenden Modells. Der Anwender erhält durch das langsam rotierende Modell einen räumlichen Eindruck des Farbraumes und damit der Konstellation aller Toleranzbereiche zueinander. Durch die Darstellung des Toleranzbereichs als eingefärbte äußere Hülle kann der Anwender im Zuge einer vollständigen Umdrehung des Modells zumeist alle Farben der äußeren Grenzen des Toleranzbereichs erfassen.

Durch Änderung des Blickwinkels auf das Modell bzw. verschiedene Zoom-Stufen kann sich der Anwender einen genauen Eindruck des Toleranzbereichs verschaffen - insbesondere bei Verwendung eines kalibrierten Bildschirmes.

Die im Folgenden dargestellten Verfahren und Bildverarbeitungssysteme basieren auf der Darstellung von Farbtoleranzbereichen innerhalb dreidimensionaler Farbräume.

Alle Farben eines Farbmodells, die durch eine farbgebende Methode tatsächlich ausgegeben werden können, können dreidimensional - als Farbraum - dargestellt werden. Hierzu sind eine Vielzahl von Farbräumen definiert worden.

Das YUV-Farbmodell bzw. der YUV-Farbraum verwendet zur Darstellung der Farbinformation zwei Komponenten, die Luminanz (Lichtstärke pro Fläche) Y und die Chrominanz (Farbanteil), wobei diese wiederum aus den zwei Unterkomponenten U und V besteht.

Der Lab-Farbraum ist ein Farbraum, der den Bereich der wahrnehmbaren Farben abdeckt. Der Farbraum ist auf Grundlage der Gegenfarbentheorie konstruiert. Das Lab-Farbmodell ist geräteunabhängig, das heißt, die Farben werden unabhängig von der Art ihrer Erzeugung und Wiedergabetechnik so definiert, wie sie sich präsentieren.

Der CIELab-Farbraum bezeichnet den von der CIE (Commission Internationale de l'Eclairage) standardisierten Lab-Farbraum.

Der HSV-Farbraum ist der Farbraum von Farbmodellen, bei denen man die Farbe mit Hilfe des Farbwerts H, der Farbsättigung S und des Hellwerts V definiert.

Ein RGB-Farbraum ist ein additiver Farbraum, der Farbwahrnehmungen durch das additive Mischen dreier Grundfarben (Rot, Grün und Blau) nachbildet. Dieser Farbraum basiert im Prinzip auf der Dreifarbentheorie.

Der CIELCh-Farbraum bezeichnet die Darstellung von Lab in Polarkoordinaten.

Gemäß einem ersten Aspekt betrifft die Erfindung ein Verfahren zum Steuern eines Bildschirms, Farbtoleranzbereiche innerhalb eines dreidimensionalen Farbraumes darzustellen, mit: Erfassen zumindest eines Farbtoleranzbereichs innerhalb des dreidimensionalen Farbraumes durch den Prozessor, wobei sich der zumindest eine Farbtoleranzbereich durch zumindest einen Farbwert in jeder Dimension und zumindest einen Toleranzparameter in zumindest einer Dimension oder Metrik des dreidimensionalen Farbraumes bestimmt; Erzeugen eines Steuersignals durch den Prozessor zum Steuern des Bildschirms, wobei das Steuersignal den Bildschirm anweist, eine rotierende dreidimensionale Darstellung des zumindest einen Farbtoleranzbereichs basierend auf den Toleranzparametern des zumindest einen Farbtoleranzbereichs auf dem Bildschirm zu erzeugen; und Steuern des Bildschirms durch das Steuersignal, die rotierende dreidimensionale Darstellung des zumindest einen Farbtoleranzbereichs auf dem Bildschirm darzustellen.

Dies hat den Vorteil, dass die Bildschirmsteuerung den Anwender in die Lage versetzt, die auf dem Bildschirm erzeugte rotierende dreidimensionale Darstellung des zumindest einen Farbtoleranzbereichs leicht zu visualisieren. Aufgrund der Rotation der dreidimensionalen Darstellung des einen oder der mehreren Farbtoleranzbereiche kann der Anwender den oder die Farbtoleranzbereiche von jeder Seite wahrnehmen und leicht erkennen, ob sich die Farbtoleranzbereiche für seine Bilderkennungsaufgabe eignen. Beispielsweise kann der Anwender anhand der rotierenden Darstellung schnell erkennen, ob sich die Farbtoleranzbereiche an irgendeiner Stelle überschneiden. Eine solche einfache Erkennung ist anhand einer statischen Darstellung auf dem Bildschirm nicht möglich, erst die Rotation gibt dem Anwender Einblick in alle Stellen des/der Farbtoleranzbereiche, so dass mit diesen exakt spezifizierbaren Farbtoleranzbereichen die auf diesen Farbtoleranzen basierende Bildverarbeitung zuverlässig gestaltet werden kann.

Gemäß einer Ausführungsform des Verfahrens beruht das Erfassen des zumindest einen Farbtoleranzbereichs durch den Prozessor auf einer anwenderbasierten Eingabe der Toleranzparameter des Farbtoleranzbereichs.

Dies hat den Vorteil, dass der Anwender durch einfache Eingabe, beispielsweise am Bildschirm, die Toleranzparameter dem Prozessor leicht und schnell übermitteln kann. Gemäß einer Ausführungsform des Verfahrens umfasst der dreidimensionale Farbraum einen der folgenden Farbräume: CIELab-Farbraum, LCh-Farbraum, RGB-Farbraum, HSV-Farbraum, YUV-Farbraum.

Dies hat den Vorteil, dass der Anwender in jedem Farbraum eine übersichtliche Darstellung der Farbtoleranzbereiche erhält. Er kann auch beispielsweise die Darstellung zwischen verschiedenen Farbräumen wechseln und ist damit flexibel.

Gemäß einer Ausführungsform des Verfahrens rotiert die rotierende dreidimensionale Darstellung des zumindest einen Farbtoleranzbereichs mit einer Drehgeschwindigkeit von etwa einer Umdrehung pro Minute bis etwa 60 Umdrehungen pro Minute.

Dies hat den Vorteil, dass der Anwender bei einer langsam rotierenden dreidimensionalen Darstellung des/der Farbtoleranzbereiche genug Zeit hat, die Darstellung auf dem Bildschirm genau zu betrachten und zu erkennen, ob es beispielsweise keine Überschneidungen gibt oder ob die Farbtoleranzbereiche auch nahe beieinander sind. Geeignete Drehgeschwindigkeiten für ein langsames Drehen der 3D-Darstellung sind dafür etwa 1 U/min bis 60 U/min, z.B. 2, 3, 5, 10, 20, 30, 40, 50 U/min. Auch Werte außerhalb dieses Bereichs sind möglich.

Gemäß einer Ausführungsform umfasst das Verfahren ein Steuern des Bildschirms durch das Steuersignal, eine rotierende dreidimensionale Darstellung des zumindest einen Farbtoleranzbereichs auf dem Bildschirm darzustellen basierend auf einer geometrischen Form, die sich aus den Grenzen des zumindest einen Farbtoleranzbereichs ergibt.

Dies hat den Vorteil, dass der Anwender einen Farbtoleranzbereich mit einer geometrischen Form verbinden kann und so leicht die Grenzen des/der Farbtoleranzbereiche erkennen bzw. visualisieren kann.

Gemäß einer Ausführungsform umfasst das Verfahren ein Bestimmen von Koordinaten einer äußeren Hülle des zumindest einen Farbtoleranzbereichs durch den Prozessor basierend auf den Toleranzparametern des zumindest einen Farbtoleranzbereichs; ein Erzeugen eines Steuersignals durch den Prozessor zum Steuern des Bildschirms, wobei das Steuersignal den Bildschirm anweist, eine rotierende dreidimensionale Darstellung der äußeren Hülle des zumindest einen Farbtoleranzbereichs basierend auf den durch den Prozessor bestimmten Koordinaten der äußeren Hülle des zumindest einen Farbtoleranzbereichs auf dem Bildschirm zu erzeugen; und ein Steuern des Bildschirms durch das Steuersignal, die rotierende dreidimensionale Darstellung der äußeren Hülle des zumindest einen Farbtoleranzbereichs auf dem Bildschirm darzustellen.

Dies hat den Vorteil, dass der Anwender einen Farbtoleranzbereich mit seiner äußeren Hülle verbinden kann und so leicht die Grenzen des/der Farbtoleranzbereiche erkennen bzw. visualisieren kann.

Gemäß einer Ausführungsform umfasst das Verfahren ein Darstellen der äußeren Hülle des zumindest einen Farbtoleranzbereichs durch eine zentrale Farbe des zumindest einen Farbtoleranzbereichs.

Dies hat den Vorteil, dass der Anwender einen Farbtoleranzbereich durch seine zentrale Farbe erkennen kann und so von anderen Farbtoleranzbereichen unterscheiden kann, die eine andere zentrale Farbe haben.

Gemäß einer Ausführungsform umfasst das Verfahren ein Darstellen der äußeren Hülle des zumindest einen Farbtoleranzbereichs durch Farben des Farbraums, die den jeweiligen Koordinaten der äußeren Hülle entsprechen.

Dies hat den Vorteil, dass der Anwender einen Farbtoleranzbereich durch die Farben des Farbraums, die den jeweiligen Koordinaten der äußeren Hülle entsprechen, erkennen kann und so von anderen Farbtoleranzbereichen unterscheiden kann, die andere Farben entsprechend ihren Hüllkoordinaten aufweisen.

Gemäß einer Ausführungsform des Verfahrens umfassen die Toleranzparameter des zumindest einen Farbtoleranzbereichs einen Sollwert und eine maximale Abweichung in jeder Dimension des dreidimensionalen Farbraumes.

Dies hat den Vorteil, dass die Toleranzparameter sich durch diese zwei Parameter Sollwert und maximale Abweichung in jeder Dimension des 3D-Farbraumes leicht bestimmen lassen.

Gemäß einer Ausführungsform des Verfahrens wird ein Farbtoleranzbereich bei die maximale Abweichung in jeder Dimension des dreidimensionalen Farbraumes angebenden Toleranzparametern in Polarkoordinaten in Form eines rotierenden Hohlzylindersektors auf dem Bildschirm dargestellt.

Dies hat den Vorteil, dass die Toleranzparameter sich in unterschiedlichen Dimensionen des Farbraums unterscheiden können, je nach Anwenderspezifikation, und trotzdem die Farbtoleranzbereiche sich in Form von Hohlzylindersektoren dem Anwender leicht einprägen.

Gemäß einer Ausführungsform des Verfahrens wird ein Farbtoleranzbereich bei die maximale Abweichung in jeder Dimension des dreidimensionalen Farbraumes angebenden Toleranzparametern in kartesischen Koordinaten in Form eines rotierenden Quaders auf dem Bildschirm dargestellt.

Dies hat den Vorteil, dass die Toleranzparameter sich in unterschiedlichen Dimensionen des Farbraums unterscheiden können, je nach Anwenderspezifikation, und trotzdem die Farbtoleranzbereiche sich in Form von Quadern dem Anwender leicht einprägen.

Gemäß einer Ausführungsform des Verfahrens wird ein Farbtoleranzbereich mit einem Toleranzparameter, der gemäß einer Metrik den maximalen Abstand zum Sollwert im dreidimensionalen Farbraum angibt, in Form einer rotierenden Kugel auf dem Bildschirm dargestellt.

Dies hat den Vorteil, dass die maximalen Abweichungen durch nur einen Toleranzparameter angegeben werden können, was das Verfahren vereinfacht, da weniger Parameter eingegeben werden müssen. Außerdem entspricht dieser Toleranzbereich im CIELab-Farbraum z. B. dem Farbunterschied "Delta E" (Radius der Kugel), der dem menschlichen Empfinden bezüglich Farbunterschiede weitgehend entspricht.

Gemäß einer Ausführungsform umfasst das Verfahren ein Ausgeben einer Warnung durch den Prozessor, falls sich zwei der Farbtoleranzbereiche innerhalb des dreidimensionalen Farbraumes überschneiden.

Dies hat den Vorteil, dass der Anwender Überschneidungen der Farbtoleranzbereiche sofort wahrnimmt ohne zuerst eine Inspektion der gesamten Darstellung machen zu müssen. Die Warnung kann visuell, taktil oder akustisch ausgestaltet sein.

Gemäß einer Ausführungsform umfasst das Verfahren ein Bestimmen von maximal möglichen Farbtoleranzbereichen bei Vorliegen von zumindest zwei Farbtoleranzbereichen derart, dass sich die zumindest zwei Farbtoleranzbereiche im dreidimensionalen Farbraum nicht überschneiden.

Dies hat den Vorteil, dass die maximalen möglichen Farbtoleranzbereiche automatisch bestimmt werden können ohne dass Interaktion durch den Anwender nötig ist. Eine automatische Bestimmung ist meist zuverlässiger und schneller als eine Eingabe durch den Anwender.

Gemäß einer Ausführungsform umfasst das Verfahren ein Bestimmen der maximal möglichen Farbtoleranzbereiche ferner derart, dass die zumindest zwei Farbtoleranzbereiche im dreidimensionalen Farbraum einen vorgegebenen Abstand zueinander einhalten.

Dies hat den Vorteil, dass der Anwender hier die Flexibilität hat, vorgegebene Abstände für die Grenzen der Farbtoleranzbereiche zu bestimmen.

Gemäß einem zweiten Aspekt betrifft die Erfindung ein Bildverarbeitungssystem, mit: einem Prozessor, der ausgelegt ist, zumindest einen Farbtoleranzbereich innerhalb eines dreidimensionalen Farbraumes zu erfassen, wobei sich der zumindest eine Farbtoleranzbereich durch zumindest einen Farbwert in jeder Dimension und zumindest einen Toleranzparameter in zumindest einer Dimension oder Metrik des dreidimensionalen Farbraumes bestimmt, und ausgelegt ist, basierend auf den Toleranzparametern des zumindest einen Farbtoleranzbereichs ein Steuersignal zum Erzeugen einer rotierenden dreidimensionalen Darstellung des zumindest einen Farbtoleranzbereichs auf einem Bildschirm zu erzeugen; und einem Bildschirm, der ausgelegt ist, ansprechend auf das Steuersignal des Prozessors die rotierende dreidimensionale Darstellung des zumindest einen Farbtoleranzbereichs auf dem Bildschirm zu erzeugen.

Dies hat den Vorteil, dass die auf dem Bildschirm erzeugte rotierende dreidimensionale Darstellung des zumindest einen Farbtoleranzbereichs durch den Anwender leicht visualisierbar ist. Aufgrund der Rotation der dreidimensionalen Darstellung des einen oder der mehreren Farbtoleranzbereiche kann der Anwender den oder die Farbtoleranzbereiche von jeder Seite wahrnehmen und leicht erkennen, ob sich die Farbtoleranzbereiche für seine Bilderkennungsaufgabe eignen. Die Rotation gibt dem Anwender Einblick in alle Stellen des/der Farbtoleranzbereiche, so dass der Anwender dem Bildverarbeitungssystem exakt spezifizierte Farbtoleranzbereiche vorgeben kann und das auf diesen Farbtoleranzen basierende Bildverarbeitungssystem zuverlässig arbeiten kann.

Gemäß einer Ausführungsform umfasst das Bildverarbeitungssystem eine Sensoranordnung, die ausgelegt ist, eine Farbe eines zu verarbeitenden Gegenstands zu erfassen und die Farbe als Koordinaten innerhalb des dreidimensionalen Farbraumes darzustellen.

Gemäß einer Ausführungsform des Bildverarbeitungssystems ist der Prozessor ausgelegt, basierend auf den Koordinaten der Farbe des Gegenstands zu bestimmen, ob sich die Farbe innerhalb des zumindest einen Farbtoleranzbereichs des dreidimensionalen Farbraumes befindet.

Dies hat den Vorteil, dass die mit der Sensoranordnung erfassten Koordinaten der Farbe eines Gegenstands schnell und zuverlässig mit den vom Anwender spezifizierten Farbtoleranzbereichen verglichen werden können, um so Aussagen zu treffen, ob sich die Farbe des Gegenstands innerhalb des spezifizierten Farbtoleranzbereichs bzw. der spezifizierten Farbtoleranzbereiche befindet oder nicht.

Gemäß einer Ausführungsform des Bildverarbeitungssystems ist der Prozessor ausgelegt, den zumindest einen Farbtoleranzbereich anzupassen, so dass sich die Farbe des Gegenstands innerhalb des zumindest einen Farbtoleranzbereichs des dreidimensionalen Farbraumes befindet.

Dies hat den Vorteil, dass das Bildverarbeitungssystem flexibel ist und die Farbtoleranzbereiche leicht anpassen kann, beispielsweise wenn der Anwender aufgrund der rotierenden Darstellung der Farbtoleranzbereiche erkennt, dass der Gegenstand sich innerhalb der Spezifikation befinden sollte.

Aspekte der Erfindung lösen die Darstellung von Farbtoleranzen innerhalb eines 3D-Farbraumes. Mithilfe des rotierenden Modells erhält der Anwender einen räumlichen Eindruck des 3D-Farbraumes. Farbtoleranzen werden durch die Darstellung der äußeren Hülle des Toleranzbereichs einfach erfasst. Die Konstellation mehrerer Toleranzbereiche ist aus der Darstellung direkt ersichtlich.
Ausführungsformen stellen die Toleranzbereiche in anderen Farbräumen, z. B. LCh, RGB, HSV, YUV, ... dar. Weitere Ausführungsformen stellen beliebige geometrischer Formen dar, die sich aus den Grenzen der Toleranzbereiche ergeben. Weitere Ausführungsformen stellen die Separiertheit von Toleranzbereichen dar, indem die Außenhülle eines Toleranzbereichs durch seine zentrale Farbe dargestellt wird und mit ggf. einer oder mehreren imaginären Lichtquellen ein 3D-Eindruck entsteht. Weitere Ausführungsformen bestimmen automatisch die maximal möglichen Toleranzbereiche für eine Menge von Farbwerten unter der Maßgabe, dass alle Toleranzbereiche separiert liegen und ggf. einen Mindestabstand haben. Weitere Ausführungsformen generieren eine Meldung, sobald sich Toleranzbereiche überschneiden.

Weitere Ausführungsbeispiele werden Bezug nehmend auf die beiliegenden Zeichnungen erläutert. Es zeigen:
- Fig. 1: eine schematische Darstellung des HSV Farbraums;
- Fig. 2: eine weitere schematische Darstellung des HSV Farbraums;
- Fig. 3: eine Darstellung einer Momentaufnahme dreier Toleranzbereiche im CIELab-Farbraum für die Farben rot, orange und grün gemäß einer Ausführungsform;
- Fig.4a: eine Darstellung einer beispielhaften Parametrierung eines Farbwertes anhand der Parameter L, a, b und des Toleranzbereichs anhand der Parameter ΔL, ΔC, Δh gemäß einer Ausführungsform;
- Fig.4b: eine Darstellung einer beispielhaften Parametrierung eines Farbwertes anhand der Parameter L, a, b und des Toleranzbereichs anhand des Parameters ΔE gemäß einer Ausführungsform;
- Fig. 5: eine Darstellung der Farbtoleranzbereiche der drei Farben rot, grün, orange im Farbraum mit dem gleichen Toleranzbereich ΔE=18 gemäß einer Ausführungsform;
- Fig. 6: eine Darstellung der zwei Farben rot und grün im Farbraum mit den großen Toleranzbereichen ΔL=25, ΔC = 30, Δh = 25° gemäß einer Ausführungsform;
- Fig. 7a,b: eine Darstellung zweier Momentaufnahmen einer Einzelfarbe mit dem gleichen Toleranzbereich ΔE=12 gemäß einer Ausführungsform;
- Fig. 8: eine Darstellung eines Ist-Farbwerts (Fadenkreuz) und eines Toleranzbereichs einer Soll-Farbe (Kugel) gemäß einer Ausführungsform;
- Fig. 9: eine schematische Darstellung eines Bildverarbeitungssystems gemäß einer Ausführungsform;
- Fig. 10: eine schematische Darstellung eines Bildverarbeitungssystems mit zusätzlicher Sensoranordnung gemäß einer Ausführungsform; und
- Fig. 11: eine schematische Darstellung eines Verfahrens zur Darstellung von Farbtoleranzbereichen innerhalb eines dreidimensionalen Farbraumes gemäß einer Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

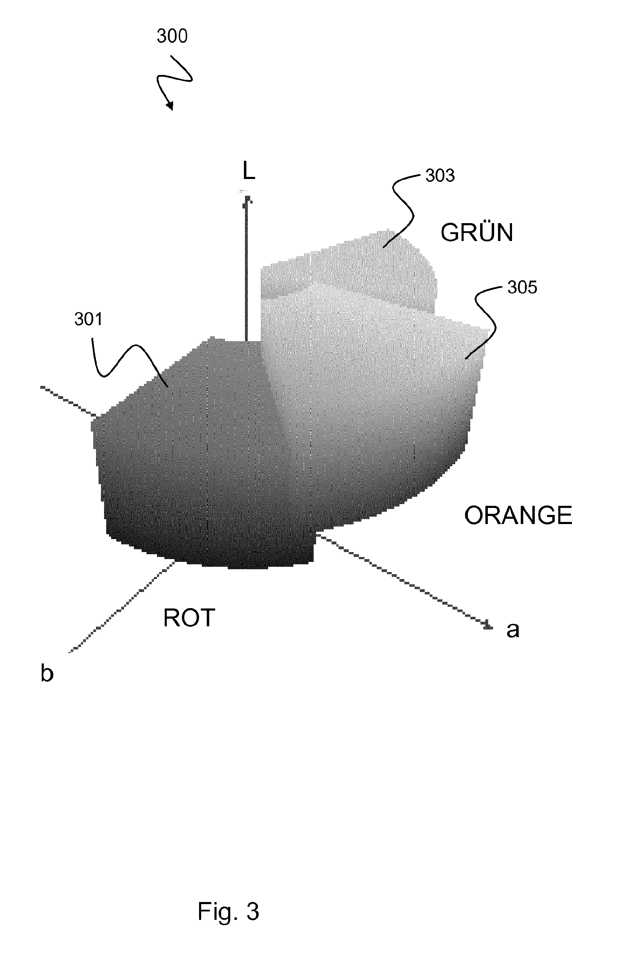

Fig. 3 zeigt eine Darstellung einer Momentaufnahme 300 dreier Toleranzbereiche im CIELab-Farbraum für die Farben rot, orange und grün gemäß einer Ausführungsform.

Es sind im CIELab-Farbraum drei Toleranzbereiche für die Farben rot 301, orange 305 und grün 303 dargestellt. Dabei wurden für jeden Toleranzbereich eine untere und eine obere Schwelle für die Größen L, C und h des LCh-Farbmodells angegeben. Dies ist gleichbedeutend mit einer Sollfarbe (L, a, b) und einer Toleranz in jeder Dimension (ΔL, ΔC, Δh). Die entstehenden Toleranzbereiche 301, 303, 305 haben die Form von Hohlzylindersektoren. Bei Betrachtung der äußeren Hülle der Toleranzbereiche 301, 303, 305 erkennt man zahlreiche Grenzfälle der durch den Toleranzbereich erfassten Farben hinsichtlich der Parameter Helligkeit (L), Sättigung (C) und Farbwinkel (h). Weiterhin erkennt man, dass sich die Toleranzbereiche der Farben rot 301 und orange 305 teilweise überschneiden.

Ohne Beschränkung der Allgemeinheit erfolgt die weitere Ausführung im CIELab-Farbraum, bei dem eine Farbe durch die Parameter L, a und b angegeben wird.

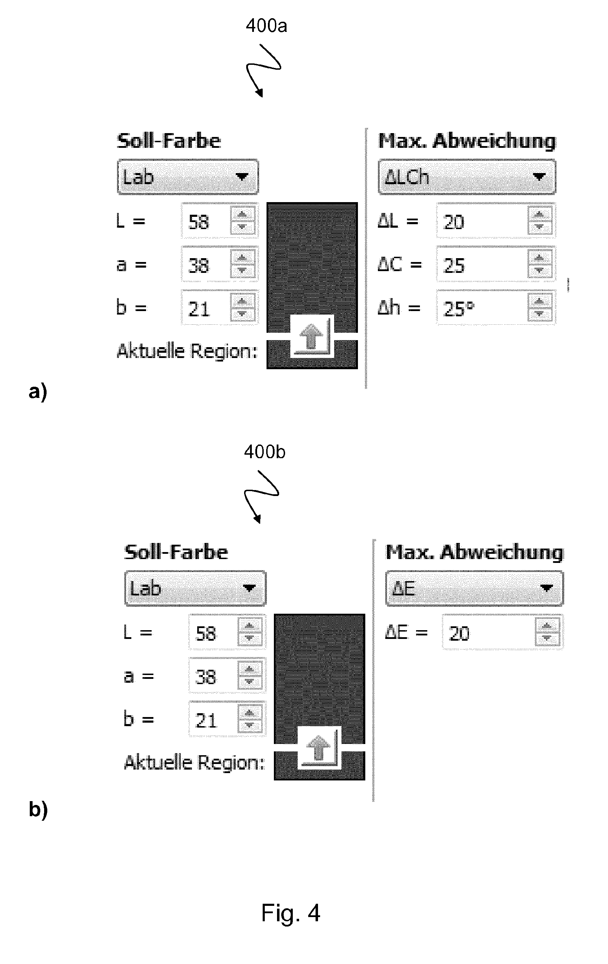

Fig. 4a zeigt eine Darstellung einer beispielhaften Parametrierung 400a eines Farbwertes anhand der Parameter L, a, b und des Toleranzbereichs anhand der Parameter ΔL, ΔC, Δh gemäß einer Ausführungsform.

Die Erfassung einer Farbe kann durch direkte Eingabe eines Farbwerts erfolgen. Zum Beispiel kann in dem in Fig. 4a dargestellten Dialog der Farbwert einer "Soll-Farbe" durch Eingabe der Parameter L, a und b (oder in einem anderen Farbraum) erfolgen. Alternativ kann der Farbwert aus einer Region im Bild ermittelt werden und durch Klicken auf das Pfeil-Symbol übernommen werden. Die Eingabe der Grenzen des Toleranzbereichs erfolgt beispielhaft durch Angabe von drei Toleranzgrößen: Helligkeit (ΔL), Sättigung (ΔC) und Farbwinkel (Δh).

Fig. 4b zeigt eine Darstellung einer beispielhaften Parametrierung 400b eines Farbwertes anhand der Parameter L, a, b und des Toleranzbereichs anhand des Parameters ΔE gemäß einer Ausführungsform. Der Farbwert ist der gleiche wie oben in Fig. 4a dargestellt, allerdings erfolgt die Eingabe des Toleranzbereichs in diesem Beispiel durch nur einen Parameter (ΔE).

Die vorgenannten Eingabemöglichkeiten für Farbwerte und Toleranzbereiche sind beispielhaft. Im Allgemeinen existieren weitere Möglichkeiten, Farbwerte und Toleranzbereichsgrenzen zu editieren. Die Erfassung einer Farbe kann auch beispielsweise durch das in der Druckschrift EP14158638 dargestellte Verfahren erfolgen.

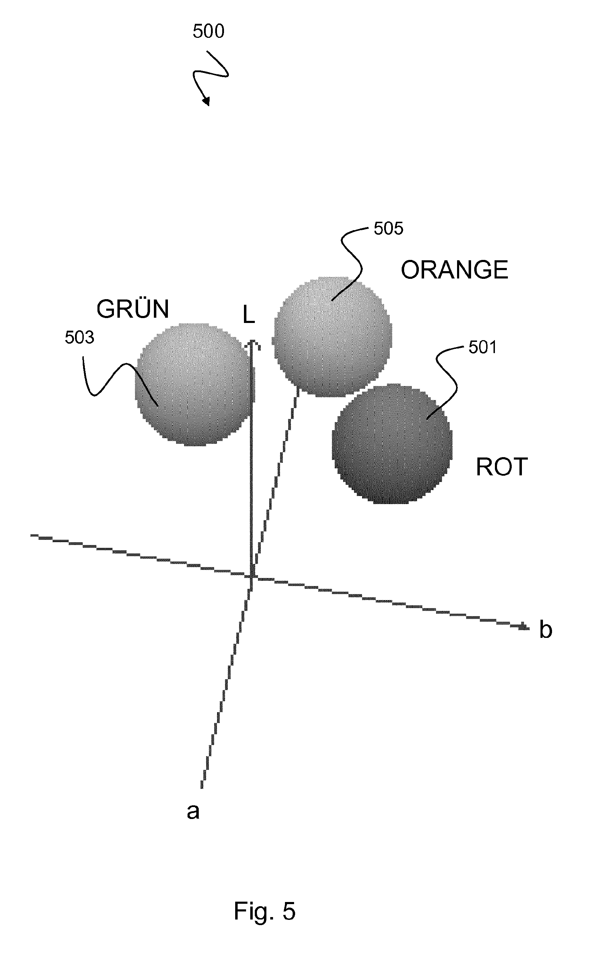

Fig. 5 zeigt eine Darstellung 500 der Farbtoleranzbereiche der drei Farben rot 501, grün 503, orange 505 im Farbraum mit dem gleichen Toleranzbereich ΔE=18 gemäß einer Ausführungsform.

Eine bevorzugte einfache Möglichkeit, Farbgrenzen zu beschreiben, erfolgt mithilfe des Parameters ΔE, der dem euklidischen Abstand zweier Farbwerte im CIELab-Farbraum entspricht. Die menschliche Wahrnehmung von Farbunterschieden kann mit dem Parameter ΔE sinnvoll technisch nachgebildet werden. Für einen unerfahrenen Anwender ist die Angabe nur eines Toleranzparameters sinnvoll, solange die Bildverarbeitungsaufgabe auf der Sensoranordnung damit gelöst werden kann.

So kann zum Beispiel die Zuordnung der Farbe einer Mehrfarb-LED zu den Farben rot, grün und orange mithilfe der in Fig. 5 dargestellten Toleranzbereiche erfolgen. Alle drei Toleranzbereiche liegen separat zueinander.

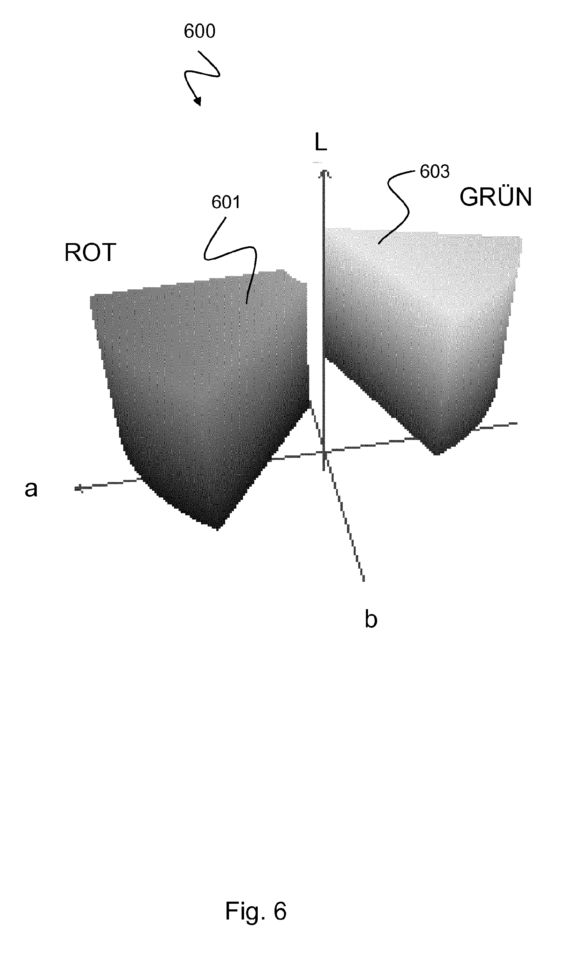

Fig. 6 zeigt eine Darstellung 600 der Farbtoleranzbereiche der zwei Farben rot 601 und grün 603 im Farbraum mit den großen Toleranzbereichen ΔL=25, ΔC = 30, Δh = 25° gemäß einer Ausführungsform.

Sollen nur die Farben rot und grün unterschieden werden, wie in Fig. 6 dargestellt, so kann der Anwender beispielsweise größere Toleranzbereiche 601, 603 wählen, die sich nicht überschneiden. Fig. 6 zeigt einen solchen Fall. Ist die Farbtreue von Bedeutung, so kann der Anwender in dieser Darstellung bereits bewerten, ob der gewählte Toleranzbereich 601, 603 seiner Vorstellung an die Farbtreue entspricht.

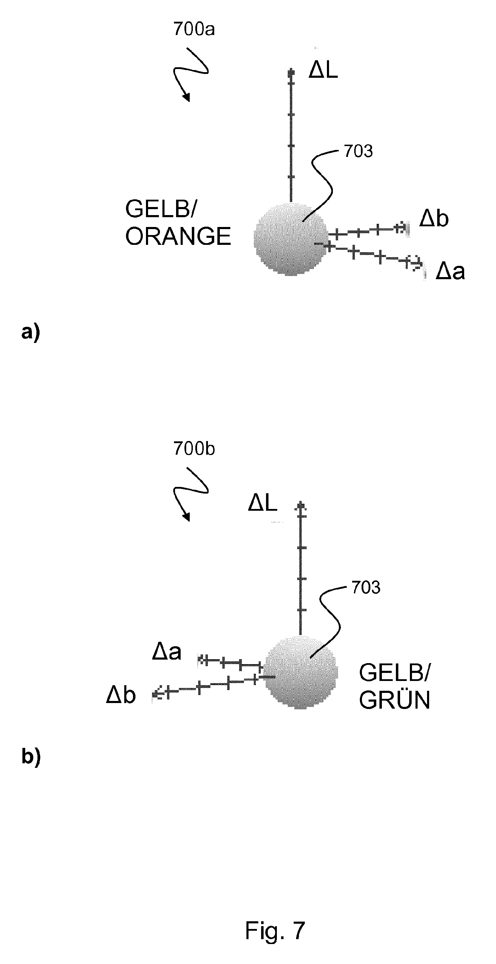

Die Figuren 7a, b zeigen eine Darstellung zweier Momentaufnahmen 700a, 700b des Farbtoleranzbereichs 703 einer Einzelfarbe mit dem gleichen Toleranzbereich ΔE=12 gemäß einer Ausführungsform.

In der Einzeldarstellung eines Toleranzbereichs können die sich ergebenden Farbschattierungen betrachtet werden. Die Figuren 7a und 7b zeigen zwei Momentaufnahmen der rotierenden Toleranzdarstellung einer gelben Farbe (ΔE=12). In Fig. 7a ist die Farbschattierung im Bereich gelb/orange, während in Fig. 7b die Farbschattierung im Bereich gelb/grün ist.

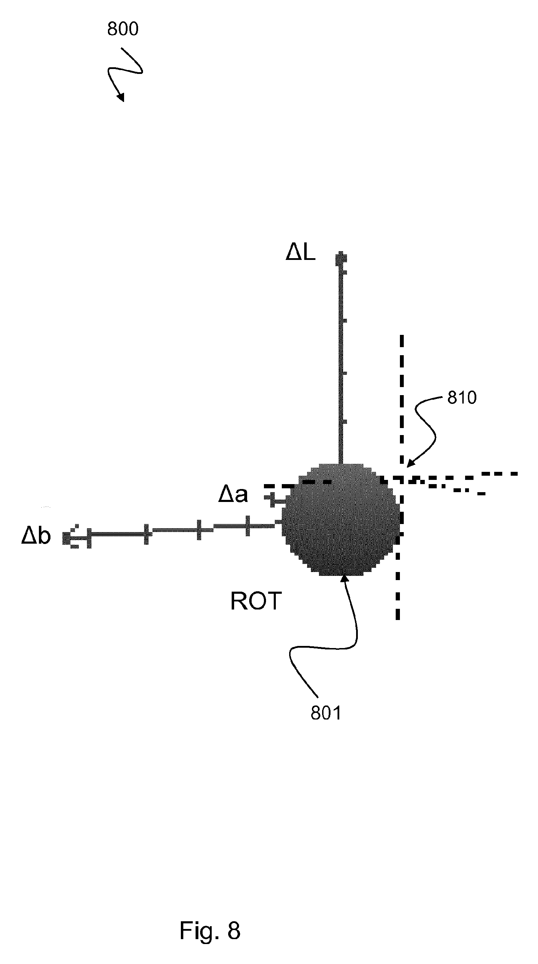

Fig. 8 zeigt eine Darstellung 800 eines Ist-Farbwerts (Fadenkreuz) 810 und eines Toleranzbereichs 801 einer Soll-Farbe (Kugel) gemäß einer Ausführungsform.

In Fig. 8 wird der Toleranzbereich 801 einer Soll-Farbe (Kugel), hier der Farbe rot, und die Lage eines Ist-Farbwerts (Fadenkreuz) 810 außerhalb der Kugel dargestellt. Die Sensoranordnung kann diese Farbabweichung quantitativ ermitteln. Der Anwender kann aus der Darstellung sofort erkennen, inwieweit der Toleranzbereich 801 die Ist-Farbe 810 nicht erfasst und so den Toleranzbereich 801 ggf. anpassen, damit diese Ist-Farbe 810 mit erfasst wird (Nachparametrieren).

Die vorgenannten Ausführungen und Beispiele zeigen, dass mithilfe der Erfindung der Anwender ohne komplexes Vorwissen über Farbräume und Metriken in Farbräumen eine sinnvolle Parametrierung der von der Sensoranordnung zu lösenden Bildverarbeitungsaufgabe vornehmen kann. Ebenso profitiert der erfahrende Anwender von einer solchen Darstellung. Durch das Einfärben der Hülle eines Toleranzbereichs gemäß der dort im Farbraum vorherrschenden Farbe werden sämtliche vom Toleranzbereich gerade noch erfassten Farben dargestellt.

In einer Ausführungsform wird der Anwender weiterhin dadurch unterstützt, dass er eine Warnung erhält, wenn sich Toleranzbereiche überschneiden.

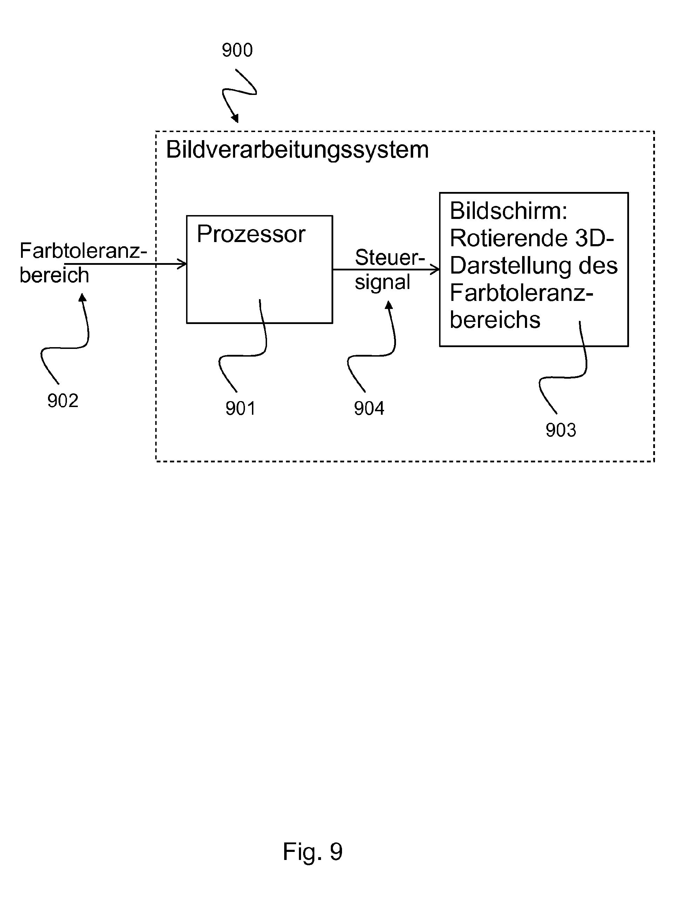

Fig. 9 zeigt eine schematische Darstellung eines Bildverarbeitungssystems 900 gemäß einer Ausführungsform. Das Bildverarbeitungssystem 900 umfasst einen Prozessor 901 und einen Bildschirm 903. Der Prozessor 901 ist dazu ausgelegt, zumindest einen Farbtoleranzbereich 902 innerhalb eines dreidimensionalen Farbraumes zu erfassen, wobei sich der zumindest eine Farbtoleranzbereich 902 durch zumindest einen Farbwert in jeder Dimension und zumindest einen Toleranzparameter in zumindest einer Dimension oder Metrik des dreidimensionalen Farbraumes bestimmt. Der Prozessor 901 ist ferner dazu ausgelegt, basierend auf den Toleranzparametern des zumindest einen Farbtoleranzbereichs 902 ein Steuersignal 904 zum Erzeugen einer rotierenden dreidimensionalen Darstellung des zumindest einen Farbtoleranzbereichs auf einem Bildschirm zu erzeugen.

Der Bildschirm 903 ist dazu ausgelegt, ansprechend auf das Steuersignal 904 des Prozessors 901 die rotierende dreidimensionale Darstellung des zumindest einen Farbtoleranzbereichs 902 auf dem Bildschirm 903 zu erzeugen.

Das Erfassen des zumindest einen Farbtoleranzbereichs 902 durch den Prozessor 901 kann auf einer anwenderbasierten Eingabe der Toleranzparameter des Farbtoleranzbereichs beruhen. Der dreidimensionale Farbraum einen der folgenden Farbräume umfassen: CIELab-Farbraum, LCh-Farbraum, RGB-Farbraum, HSV-Farbraum, YUV-Farbraum. Die rotierende dreidimensionale Darstellung des zumindest einen Farbtoleranzbereichs kann mit einer Drehgeschwindigkeit von etwa einer Umdrehung pro Minute bis etwa 60 Umdrehungen pro Minute rotieren. Das Steuersignal 904 kann den Bildschirm anweisen, eine rotierende dreidimensionale Darstellung des zumindest einen Farbtoleranzbereichs auf dem Bildschirm basierend auf einer geometrischen Form, die sich aus den Grenzen des zumindest einen Farbtoleranzbereichs ergibt, zu erzeugen.

Der Prozessor 901 kann Koordinaten einer äußeren Hülle des zumindest einen Farbtoleranzbereichs basierend auf den Toleranzparametern des zumindest einen Farbtoleranzbereichs bestimmen. Der Prozessor 901 kann ferner das Steuersignal zum Steuern des Bildschirms erzeugen, wobei das Steuersignal 904 den Bildschirm 903 anweist, eine rotierende dreidimensionale Darstellung der äußeren Hülle des zumindest einen Farbtoleranzbereichs basierend auf den durch den Prozessor 901 bestimmten Koordinaten der äußeren Hülle des zumindest einen Farbtoleranzbereichs auf dem Bildschirm zu erzeugen. Das von dem Prozessor 901 erzeugte Steuersignal 904 kann den Bildschirm anweisen, die äußere Hülle des zumindest einen Farbtoleranzbereichs durch eine zentrale Farbe des zumindest einen Farbtoleranzbereichs darzustellen. Alternativ kann das von dem Prozessor 901 erzeugte Steuersignal 904 den Bildschirm 903 anweisen, die äußere Hülle des zumindest einen Farbtoleranzbereichs durch Farben des Farbraums darzustellen, die den jeweiligen Koordinaten der äußeren Hülle entsprechen.

Die Toleranzparameter des zumindest einen Farbtoleranzbereichs können einen Sollwert und eine maximale Abweichung in jeder Dimension des dreidimensionalen Farbraumes umfassen. Ein Farbtoleranzbereich kann bei die maximale Abweichung in jeder Dimension des dreidimensionalen Farbraumes angebenden Toleranzparametern in Form eines rotierenden Hohlzylindersektors (Polarkoordinaten) oder Quaders (kartesische Koordinaten) auf dem Bildschirm dargestellt werden. Ein Farbtoleranzbereich kann bei einem gemäß einer Metrik als maximaler Abstand zum Sollwert angegebenem Toleranzparameter in Form einer rotierenden Kugel auf dem Bildschirm 903 dargestellt werden. Die Angabe einer oberen und unteren Toleranzgrenze für eine Dimension lässt sich auf den oben beschriebenen Fall eines Sollwertes (Mittelwert der beiden Toleranzgrenzen) und eines Toleranzparameters (obere Grenze minus Sollwert) zurückführen. Der Prozessor 901 kann eine Warnung ausgeben, falls sich zwei der Farbtoleranzbereiche 902 innerhalb des dreidimensionalen Farbraumes überschneiden. Der Prozessor 901 kann maximal mögliche Farbtoleranzbereiche bei Vorliegen von zumindest zwei Farbtoleranzbereichen 902 derart bestimmen, dass sich die zumindest zwei Farbtoleranzbereiche 902 im dreidimensionalen Farbraum nicht überschneiden. Der Prozessor 901 kann die maximal möglichen Farbtoleranzbereiche ferner derart bestimmen, dass die zumindest zwei Farbtoleranzbereiche im dreidimensionalen Farbraum einen vorgegebenen Abstand zueinander einhalten.

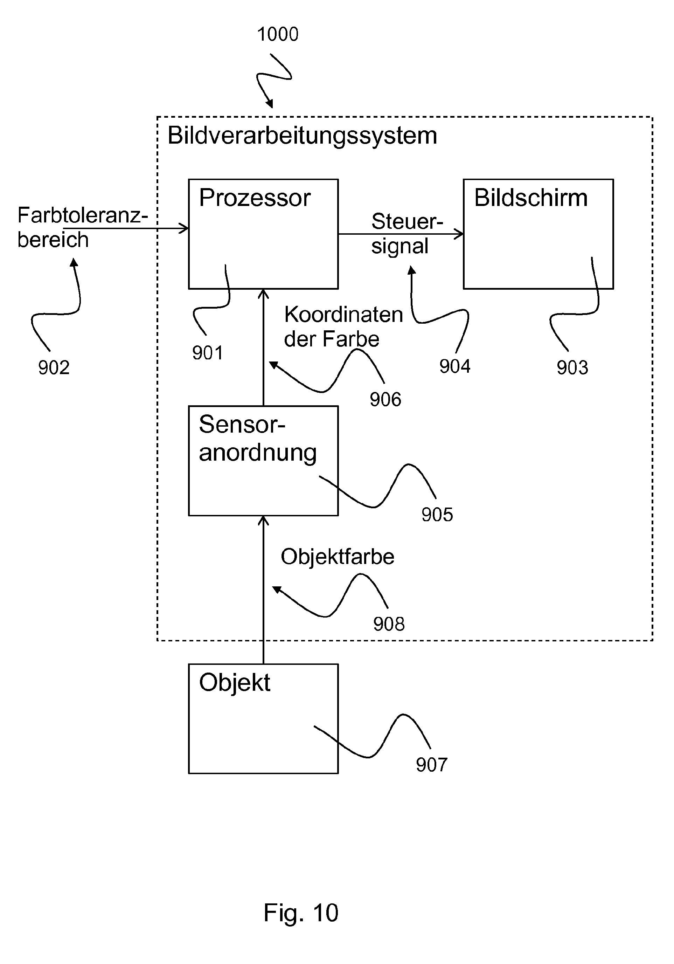

Fig. 10 zeigt eine schematische Darstellung eines Bildverarbeitungssystems 1000 mit zusätzlicher Sensoranordnung 905 gemäß einer Ausführungsform. Das Bildverarbeitungssystem 1000 entspricht dem oben beschriebenen Bildverarbeitungssystem 900 der Fig. 9, umfasst aber noch eine zusätzliche Sensoranordnung 905.

Die Sensoranordnung 905 ist dafür ausgelegt, eine Farbe 908 eines zu verarbeitenden Gegenstands bzw. Objekts 907 zu erfassen und die Farbe 908 als Koordinaten 906 innerhalb des dreidimensionalen Farbraumes darzustellen, in etwa gemäß der Beschreibung zu Fig. 8, wenn die Farbe 908 des Gegenstands 907 durch das Koordinatenkreuz 810 spezifiziert ist.

Die Sensoranordnung 905 ist dafür ausgelegt, eine Farbe 908 eines zu verarbeitenden Gegenstands bzw. Objekts 907 zu erfassen und die Farbe 908 als Zahlentripel anzugeben, in etwa gemäß der Beschreibung zu Fig. 4a,b.
Der Prozessor 901 ist dazu ausgelegt, basierend auf den Koordinaten 906 der Farbe 908 des Gegenstands 907 zu bestimmen, ob sich die Farbe 908 innerhalb des zumindest einen Farbtoleranzbereichs 902 des dreidimensionalen Farbraumes befindet.

Der Prozessor 901 kann ferner dazu ausgelegt sein, den zumindest einen Farbtoleranzbereich 902 anzupassen, so dass sich die Farbe 908 des Gegenstands 907 innerhalb des zumindest einen Farbtoleranzbereichs 902 des dreidimensionalen Farbraumes befindet.

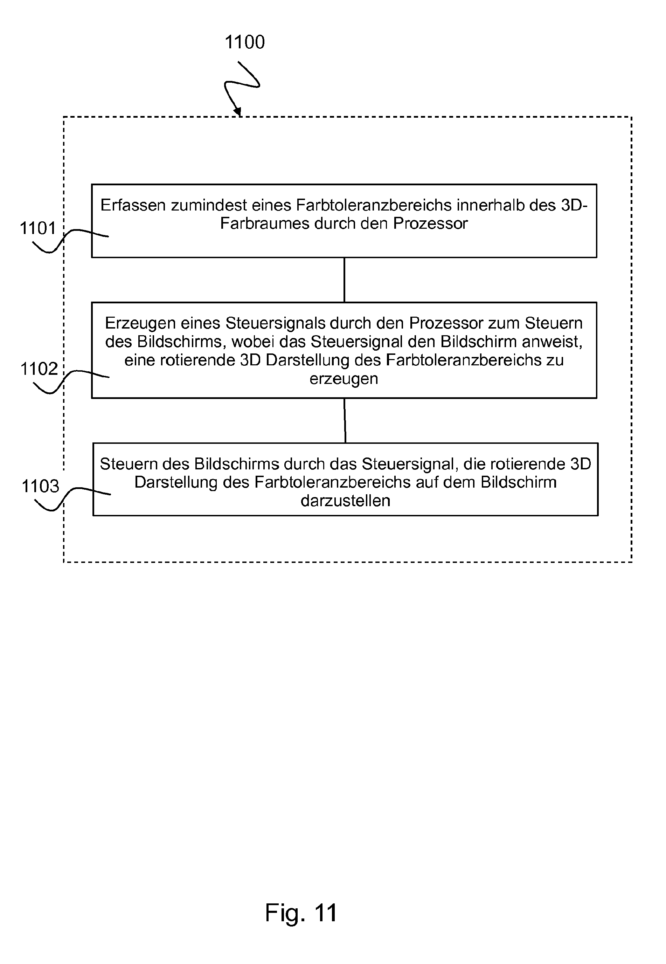

Fig. 11 zeigt eine schematische Darstellung eines Verfahrens zum Steuern eines Bildschirms, Farbtoleranzbereiche innerhalb eines dreidimensionalen Farbraumes darzustellen gemäß einer Ausführungsform.

Das Verfahren umfasst ein Erfassen 1101 zumindest eines Farbtoleranzbereichs innerhalb des dreidimensionalen Farbraumes durch den Prozessor, wobei sich der zumindest eine Farbtoleranzbereich durch zumindest einen Toleranzparameter in zumindest einer Dimension oder Metrik des dreidimensionalen Farbraumes bestimmt.

Das Verfahren umfasst ein Erzeugen 1102 eines Steuersignals durch den Prozessor zum Steuern des Bildschirms, wobei das Steuersignal den Bildschirm anweist, eine rotierende dreidimensionale Darstellung des zumindest einen Farbtoleranzbereichs basierend auf den Toleranzparametern des zumindest einen Farbtoleranzbereichs auf dem Bildschirm zu erzeugen.

Das Verfahren umfasst ein Steuern 1103 des Bildschirms durch das Steuersignal, die rotierende dreidimensionale Darstellung des zumindest einen Farbtoleranzbereichs auf dem Bildschirm darzustellen.

Das Erfassen 1101 des zumindest einen Farbtoleranzbereichs durch den Prozessor kann auf einer anwenderbasierten Eingabe der Toleranzparameter des Farbtoleranzbereichs beruhen.

Der dreidimensionale Farbraum kann einen der folgenden Farbräume umfassen: CIELab-Farbraum, LCh-Farbraum, RGB-Farbraum, HSV-Farbraum, YUV-Farbraum. Die rotierende dreidimensionale Darstellung des zumindest einen Farbtoleranzbereichs kann mit einer Drehgeschwindigkeit von etwa einer Umdrehung pro Minute bis etwa 60 Umdrehungen pro Minute rotieren.

Das Verfahren 1100 kann ferner ein Steuern des Bildschirms durch das Steuersignal, eine rotierende dreidimensionale Darstellung des zumindest einen Farbtoleranzbereichs auf dem Bildschirm darzustellen, basierend auf einer geometrischen Form, die sich aus den Grenzen des zumindest einen Farbtoleranzbereichs ergibt, umfassen.

Das Verfahren 1100 kann ferner umfassen: Bestimmen von Koordinaten einer äußeren Hülle des zumindest einen Farbtoleranzbereichs durch den Prozessor basierend auf den Toleranzparametern des zumindest einen Farbtoleranzbereichs; Erzeugen eines Steuersignals durch den Prozessor zum Steuern des Bildschirms, wobei das Steuersignal den Bildschirm anweist, eine rotierende dreidimensionale Darstellung der äußeren Hülle des zumindest einen Farbtoleranzbereichs basierend auf den durch den Prozessor bestimmten Koordinaten der äußeren Hülle des zumindest einen Farbtoleranzbereichs auf dem Bildschirm zu erzeugen; und Steuern des Bildschirms durch das Steuersignal, die rotierende dreidimensionale Darstellung der äußeren Hülle des zumindest einen Farbtoleranzbereichs auf dem Bildschirm darzustellen.

Das Verfahren 1100 kann ferner umfassen: Darstellen der äußeren Hülle des zumindest einen Farbtoleranzbereichs durch eine zentrale Farbe des zumindest einen Farbtoleranzbereichs; oder Darstellen der äußeren Hülle des zumindest einen Farbtoleranzbereichs durch Farben des Farbraums, die den jeweiligen Koordinaten der äußeren Hülle entsprechen.

Die Toleranzparameter des zumindest einen Farbtoleranzbereichs können einen Sollwert und eine maximale Abweichung in jeder Dimension des dreidimensionalen Farbraumes umfassen.

Ein Farbtoleranzbereich kann bei die maximale Abweichung in jeder Dimension des dreidimensionalen Farbraumes angebenden Toleranzparametern in Form eines rotierenden Hohlzylindersektors (Polarkoordinaten) oder Quaders (kartesische Koordinaten) auf dem Bildschirm dargestellt werden.

Ein Farbtoleranzbereich kann bei einem gemäß einer Metrik als maximaler Abstand zum Sollwert angebenden Toleranzparameter in Form einer rotierenden Kugel auf dem Bildschirm dargestellt werden.

Das Verfahren kann ferner ein Ausgeben einer Warnung durch den Prozessor umfassen, falls sich zwei der Farbtoleranzbereiche innerhalb des dreidimensionalen Farbraumes überschneiden.

Das Verfahren 1100 kann ferner ein Bestimmen von maximal möglichen Farbtoleranzbereichen bei Vorliegen von zumindest zwei Farbtoleranzbereichen umfassen, derart, dass sich die zumindest zwei Farbtoleranzbereiche im dreidimensionalen Farbraum nicht überschneiden.

Das Verfahren 1100 kann ferner ein Bestimmen der maximal möglichen Farbtoleranzbereiche umfassen, derart, dass die zumindest zwei Farbtoleranzbereiche im dreidimensionalen Farbraum einen vorgegebenen Abstand zueinander einhalten.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 11 beschriebene Verfahren 1100 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, zumindest einen Farbtoleranzbereich innerhalb des dreidimensionalen Farbraumes durch den Prozessor zu erfassen 1101, wobei sich der zumindest eine Farbtoleranzbereich durch zumindest einen Farbwert in jeder Dimension und zumindest einen Toleranzparameter in zumindest einer Dimension oder Metrik des dreidimensionalen Farbraumes bestimmt; ein Steuersignal durch den Prozessor zum Steuern des Bildschirms zu erzeugen 1102, wobei das Steuersignal den Bildschirm anweist, eine rotierende dreidimensionale Darstellung des zumindest einen Farbtoleranzbereichs basierend auf den Toleranzparametern des zumindest einen Farbtoleranzbereichs auf dem Bildschirm zu erzeugen; und den Bildschirm durch das Steuersignal zu steuern 1103, die rotierende dreidimensionale Darstellung des zumindest einen Farbtoleranzbereichs auf dem Bildschirm darzustellen.

Der Computer kann ein PC sein, beispielsweise ein PC eines Computernetzwerks. Der Computer kann als ein Chip, ein ASIC, ein Mikroprozessor, ein Multiprozessor oder ein Signalprozessor realisiert sein und in einem Computernetzwerk, beispielsweise einem Bildverarbeitungssystem 900, 1000 wie in den Figuren 9 und 10 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. Ein Verfahren (1100) zum Steuern eines Bildschirms (903), Farbtoleranzbereiche innerhalb eines dreidimensionalen Farbraumes darzustellen, mit:
Erfassen (1101) zumindest eines Farbtoleranzbereichs (301, 303, 305) innerhalb des dreidimensionalen Farbraumes durch den Prozessor (901), wobei sich der zumindest eine Farbtoleranzbereich (301, 303, 305) durch zumindest einen Farbwert in jeder Dimension (L, a, b) und zumindest einen Toleranzparameter (ΔL, ΔC, Δh oder ΔE) in zumindest einer Dimension oder Metrik des dreidimensionalen Farbraumes bestimmt;
Erzeugen (1102) eines Steuersignals (904) durch den Prozessor (901) zum Steuern des Bildschirms (903), wobei das Steuersignal (904) den Bildschirm (903) anweist, eine rotierende dreidimensionale Darstellung des zumindest einen Farbtoleranzbereichs (301, 303, 305) basierend auf dem Farbwert (L, a, b) und den Toleranzparametern (ΔL, ΔC, Δh oder ΔE) des zumindest einen Farbtoleranzbereichs (301, 303, 305) auf dem Bildschirm (903) zu erzeugen; und
Steuern (1103) des Bildschirms (903) durch das Steuersignal (904), die rotierende dreidimensionale Darstellung des zumindest einen Farbtoleranzbereichs (301, 303, 305) auf dem Bildschirm (903) darzustellen.

2. Das Verfahren (1100) nach Anspruch 1,
wobei das Erfassen (1101) des zumindest einen Farbtoleranzbereichs (301, 303, 305) durch den Prozessor (901) auf einer anwenderbasierten Eingabe des Farbwerts (L, a, b) und der Toleranzparameter (ΔL, ΔC, Δh oder ΔE) des Farbtoleranzbereichs (301, 303, 305) beruht.

3. Das Verfahren (1100) nach Anspruch 1 oder 2,
wobei die Angabe der Toleranzparameter einen der folgenden Fälle umfasst:
Angabe von Grenzen in einem Polarkoordinatensystem (ΔL, ΔC, Δh oder ΔH, ΔS, ΔV),
Angabe von Grenzen in einem kartesischen Koordinatensystem (ΔL, Δa, Δb oder ΔR, ΔG, ΔB oder ΔY, ΔU, ΔV),
Angabe des maximalen Abstandes zu einem vorgegeben Farbwert gemäß einer Metrik im Farbraum (euklidischer Abstand ΔE).

4. Das Verfahren (1100) nach einem der vorstehenden Ansprüche,
wobei die rotierende dreidimensionale Darstellung des zumindest einen Farbtoleranzbereichs (301, 303, 305) mit einer Drehgeschwindigkeit von etwa einer Umdrehung pro Minute bis etwa 60 Umdrehungen pro Minute rotiert.

5. Das Verfahren (1100) nach einem der vorstehenden Ansprüche, mit:
Steuern des Bildschirms (903) durch das Steuersignal (904), eine rotierende dreidimensionale Darstellung des zumindest einen Farbtoleranzbereichs (301, 303, 305) auf dem Bildschirm (903) darzustellen basierend auf einer geometrischen Form, die sich aus den Grenzen des zumindest einen Farbtoleranzbereichs (301, 303, 305) ergibt.

6. Das Verfahren (1100) nach einem der vorstehenden Ansprüche, mit:
Bestimmen von Koordinaten einer äußeren Hülle des zumindest einen Farbtoleranzbereichs (301, 303, 305) durch den Prozessor (901) basierend auf den Toleranzparametern des zumindest einen Farbtoleranzbereichs (301, 303, 305);
Erzeugen eines Steuersignals (904) durch den Prozessor (901) zum Steuern des Bildschirms (903), wobei das Steuersignal (904) den Bildschirm (903) anweist, eine rotierende dreidimensionale Darstellung der äußeren Hülle des zumindest einen Farbtoleranzbereichs (301, 303, 305) basierend auf den durch den Prozessor (901) bestimmten Koordinaten der äußeren Hülle des zumindest einen Farbtoleranzbereichs (301, 303, 305) auf dem Bildschirm (903) zu erzeugen; und
Steuern des Bildschirms (903) durch das Steuersignal (904), die rotierende dreidimensionale Darstellung der äußeren Hülle des zumindest einen Farbtoleranzbereichs (301, 303, 305) auf dem Bildschirm (903) darzustellen.

7. Das Verfahren (1100) nach Anspruch 6, mit:
Darstellen der äußeren Hülle des zumindest einen Farbtoleranzbereichs (301, 303, 305) durch eine zentrale Farbe des zumindest einen Farbtoleranzbereichs (301, 303, 305); oder
Darstellen der äußeren Hülle des zumindest einen Farbtoleranzbereichs (301, 303, 305) durch Farben des Farbraums, die den jeweiligen Koordinaten der äußeren Hülle entsprechen.

8. Das Verfahren (1100) nach einem der vorstehenden Ansprüche,
wobei die Toleranzparameter (ΔL, ΔC, Δh) des zumindest einen Farbtoleranzbereichs (301, 303, 305) eine maximale Abweichung (ΔL, ΔC, Δh) in jeder Dimension des dreidimensionalen Farbraumes umfassen.

9. Das Verfahren (1100) nach Anspruch 8,
wobei ein Farbtoleranzbereich (301, 303, 305) bei die maximale Abweichung in jeder Dimension des dreidimensionalen Farbraumes vorzugsweise in Polarkoordinaten angebenden Toleranzparametern in Form eines rotierenden Hohlzylindersektors auf dem Bildschirm (903) dargestellt wird; und/oder
wobei ein Farbtoleranzbereich bei die maximale Abweichung in jeder Dimension des dreidimensionalen Farbraumes in kartesischen Koordinaten angebenden Toleranzparametern in Form eines rotierenden Quaders auf dem Bildschirm (903) dargestellt wird; und/oder wobei ein Farbtoleranzbereich (501, 503, 505) bei einem gemäß einer Metrik als maximaler Abstand zum Sollwert angebenden Toleranzparameter in Form einer rotierenden Kugel auf dem Bildschirm (903) dargestellt wird.

10. Das Verfahren (1100) nach einem der vorstehenden Ansprüche, mit:
Ausgeben einer Warnung durch den Prozessor (901), falls sich zwei der Farbtoleranzbereiche (301, 303, 305) innerhalb des dreidimensionalen Farbraumes überschneiden.

11. Das Verfahren (1100) nach einem der vorstehenden Ansprüche, mit:
Bestimmen von maximal möglichen Farbtoleranzbereichen bei Vorliegen von zumindest zwei Farbtoleranzbereichen (601, 603) derart, dass sich die zumindest zwei Farbtoleranzbereiche (601, 603) im dreidimensionalen Farbraum nicht überschneiden.

12. Das Verfahren (1100) nach Anspruch 11, mit
Bestimmen der maximal möglichen Farbtoleranzbereiche (601, 603) ferner derart, dass die zumindest zwei Farbtoleranzbereiche im dreidimensionalen Farbraum einen vorgegebenen Abstand zueinander einhalten.

13. Bildverarbeitungssystem (900, 1000), mit:
einem Prozessor (901), der ausgelegt ist, zumindest einen Farbtoleranzbereich (902) innerhalb eines dreidimensionalen Farbraumes zu erfassen, wobei sich der zumindest eine Farbtoleranzbereich (902) durch zumindest einen Farbwert in jeder Dimension und zumindest einen Toleranzparameter in zumindest einer Dimension des dreidimensionalen Farbraumes bestimmt, und ausgelegt ist, basierend auf den Toleranzparametern des zumindest einen Farbtoleranzbereichs (902) ein Steuersignal (904) zum Erzeugen einer rotierenden dreidimensionalen Darstellung des zumindest einen Farbtoleranzbereichs (902) auf einem Bildschirm zu erzeugen; und
einem Bildschirm (903), der ausgelegt ist, ansprechend auf das Steuersignal (904) des Prozessors (901) die rotierende dreidimensionale Darstellung des zumindest einen Farbtoleranzbereichs (902) auf dem Bildschirm (903) zu erzeugen.

14. Das Bildverarbeitungssystem (1000) nach Anspruch 13, mit
einer Sensoranordnung (905), die ausgelegt ist, eine Farbe (908) eines zu verarbeitenden Gegenstands (907) zu erfassen und die Farbe (908) als Koordinaten (906) innerhalb des dreidimensionalen Farbraumes darzustellen,
wobei der Prozessor (901) ausgelegt ist, basierend auf den Koordinaten (906) der Farbe (908) des Gegenstands (907) zu bestimmen, ob sich die Farbe (908) innerhalb des zumindest einen Farbtoleranzbereichs (902) des dreidimensionalen Farbraumes befindet.

15. Das Bildverarbeitungssystem (1000) nach Anspruch 14,
wobei der Prozessor (901) ausgelegt ist, den zumindest einen Farbtoleranzbereich (902) anzupassen, so dass sich die Farbe (908) des Gegenstands (907) innerhalb des zumindest einen Farbtoleranzbereichs (902) des dreidimensionalen Farbraumes befindet.
